# FASCICULE DE BREVET EUROPEEN

(11) **EP 2 903 429 B1**
(45) Date de publication et mention de la délivrance du brevet: **09.11.2016**
(21) Numéro de dépôt: 13771511.6
(22) Date de dépôt: 03.10.2013
(51) Int. Cl.: A01M 1/02, A01M 1/04, A01M 1/10, A01M 1/22

(54) **PIEGE POUR FRELONS**
HORNISSENFALLE
HORNET TRAP

(30) Priorité: 04.10.2012 FR 1259436
(43) Date de publication de la demande: 12.08.2015
(73) Titulaire: Commissariat à l'Énergie Atomique et aux Énergies Alternatives, 75015 Paris (FR)
(72) Inventeur: RIBIERE-THARAUD, Nicolas, 46110 Cavagnac (FR); BOURZEIX, Michel, 19360 Malemort sur Corrèze (FR)
(74) Mandataire: Brevalex
(86) Numéro de dépôt international: PCT/EP2013/070643
(87) Numéro de publication internationale: WO 2014/053604

(56) Documents cités:
- CN-A- 102 177 878
- DE-U1-202004 001 285
- JP-A- 2003 339 291

## Description

### Domaine technique et art antérieur

L'invention concerne un piège pour frelons et, plus particulièrement, pour frelons asiatiques.

L'invention s'applique au domaine de l'éradication des insectes nuisibles à la biodiversité et, à terme, à la santé humaine, voir par exemple les documents CN-A-102 177 878 et JP-A-2003 339291.

Le frelon asiatique connaît actuellement un essor rapide en nombre d'individus et en répartition géographique. En Asie, les frelons asiatiques ne sont pas considérés comme nuisibles car il existe des prédateurs naturels à ces insectes. Ce n'est pas le cas sur le continent européen où leur éradication est donc nécessaire.

A ce jour, la technique d'élimination des frelons asiatiques consiste à injecter dans les nids de frelons un produit anesthésiant et, une fois les insectes anesthésiés, à s'emparer des nids et à procéder à leur destruction par incinération.

Cette technique est complexe à mettre en oeuvre, polluante et risquée pour les intervenants. Il est également possible que des insectes appartenant au nid échappent à ce processus de destruction et contribuent ainsi à l'expansion de l'espèce.

L'invention ne présente pas ces inconvénients.

### Exposé de l'invention

En effet, l'invention concerne un piège pour frelon qui comprend :
- une enceinte métallique qui définit une cavité, une paroi de l'enceinte étant munie de moyens d'ouverture aptes à permettre une introduction d'au moins un frelon dans la cavité, les moyens d'ouverture étant dimensionnés pour que des ondes électromagnétiques de fréquence donnée présentes dans la cavité ne puissent pas sortir de la cavité,
- des moyens aptes à détecter la présence d'au moins un frelon dans la cavité, et
- une source d'ondes électromagnétiques apte à générer des ondes électromagnétiques à la fréquence donnée à l'intérieur de la cavité dès lors qu'un frelon est détecté dans la cavité.

Selon une caractéristique supplémentaire de l'invention, les moyens d'ouverture sont constitués d'un réseau de guides d'ondes de type nid d'abeille qui constitue tout ou partie d'une paroi de l'enceinte.

Selon une autre caractéristique supplémentaire de l'invention, la cavité contient des moyens d'appel aptes à attirer des frelons dans la cavité. Les moyens d'appel comprennent une source de lumière intense et/ou une source sonore et/ou un appât chimique et/ou un appât biologique. Dans un mode de réalisation particulier de l'invention, les moyens d'appel sont des moyens d'appel de frelons asiatiques.

Selon encore une autre caractéristique supplémentaire de l'invention, les moyens aptes à détecter la présence d'au moins un frelon dans la cavité comprennent des moyens optiques qui créent une nappe de lumière dans la cavité et des moyens électroniques qui délivrent un signal de commande apte à déclencher la source d'ondes électromagnétiques dès lors qu'un frelon traverse la nappe de lumière.

Selon encore une autre caractéristique supplémentaire de l'invention, la fréquence donnée est sensiblement égale à 2,45 GHz.

Selon encore une autre caractéristique supplémentaire de l'invention, la source d'ondes électromagnétiques est un magnétron.

### Brève description des figures

D'autres caractéristiques et avantages de l'invention apparaîtront à la lumière de la description qui va suivre, faite en référence aux figures jointes, parmi lesquelles :
- La figure 1 représente un piège micro-ondes pour frelons selon le mode de réalisation préférentiel de l'invention ;
- La figure 2 représente une vue de détail du piège micro-ondes représenté en figure 1 ;
- La figure 3 représente un premier mode de réalisation d'un perfectionnement du piège micro-ondes de l'invention ;
- La figure 4 représente un deuxième mode de réalisation du perfectionnement du piège micro-ondes de l'invention.

Sur toutes les figures, les mêmes références désignent les mêmes éléments.

### Exposé détaillé d'un mode de réalisation particulier de l'invention

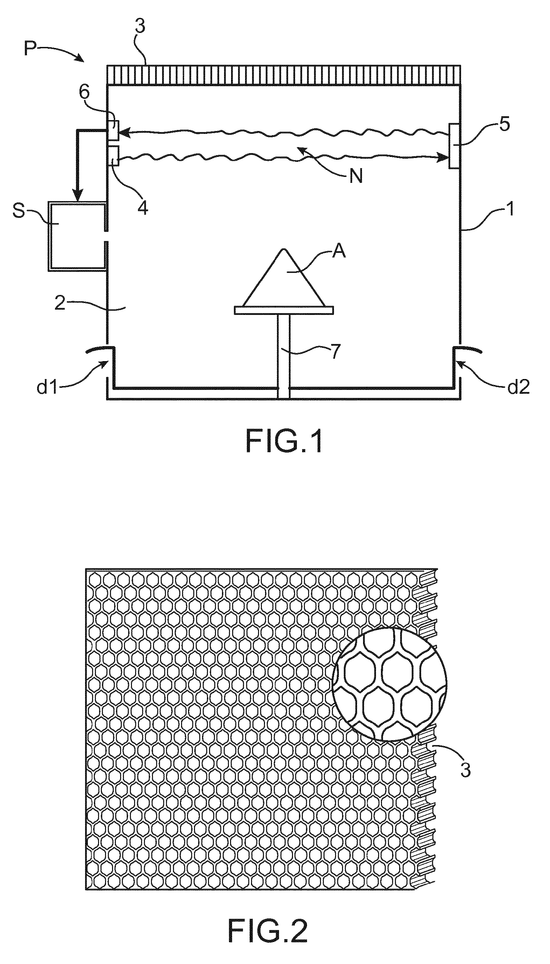

La figure 1 représente un piège micro-ondes pour frelons selon le mode de réalisation préférentiel de l'invention.

Le piège micro-ondes P comprend les moyens essentiels suivants :
- une enceinte métallique 1 qui définit une cavité 2 de forme préférentiellement parallélépipédique, une paroi de l'enceinte étant munie de moyens 3 aptes à permettre une introduction des frelons dans la cavité,
- des moyens aptes à détecter la présence d'au moins un frelon dans la cavité, et
- une source S d'ondes électromagnétiques apte à générer des ondes électromagnétiques à l'intérieur de la cavité dès lors qu'un frelon est détecté dans la cavité.

Les moyens 3 aptes à permettre une introduction des frelons dans la cavité sont représentés en figure 2. Ces moyens sont constitués par un réseau de guides d'ondes de type nid d'abeille. Tout ou partie d'une paroi est alors constituée d'un tel réseau. Préférentiellement, c'est la paroi « supérieure » (en référence à la paroi « inférieure » qui est posée à terre lors de l'utilisation du piège) qui est formée en tout ou partie d'un réseau de guides d'ondes de type nid d'abeille. Les dimensions des guides d'ondes sont telles que, d'une part, les frelons sont aptes à pénéter dans la cavité 2 et, d'autre part, les ondes électromagnétiques, lorsqu'elles sont présentes dans la cavité, ne peuvent s'échapper de la cavité (fréquence de coupure). De fait, la cavité munie des moyens d'ouverture 3 se comporte comme un four micro-ondes et la fréquence des ondes électromagnétiques est préférentiellement choisie sensiblement égale à 2,45 GHz.

La source S qui émet les ondes électromagnétiques dans la cavité est préférentiellement un magnétron placé sur une des parois extérieures de la cavité, laquelle paroi est alors percée d'un orifice qui permet le passage des ondes. Selon un autre mode de réalisation de l'invention, la source S est placée à l'intérieur de cavité. La source S émet des ondes dès lors que la présence d'un frelon est détectée dans la cavité. A cette fin, le dispositif de piégeage P comprend un système de détection de présence de frelon.

Le système de détection de présence de frelon fonctionne préférentiellement selon le principe de la barrière optique. A cette fin, le système de détection comprend des moyens optiques qui créent une nappe de lumière N à l'intérieur de la cavité et des moyens électroniques qui délivrent un signal de commande apte à déclencher la source S, dès lors qu'un frelon traverse la nappe N.

Les moyens optiques qui créent une nappe de lumière N à l'intérieur de la cavité comprennent un ensemble 4 de diodes d'émission de lumière et un réflecteur 5 placé en face de l'ensemble de diodes. Les diodes émettent la lumière en direction du réflecteur 5 et le réflecteur 5 réfléchit la lumière qu'il reçoit vers un cicuit de détection 6 placé à côté des diodes. Le circuit de détection 6 comprend un détecteur de lumière, des moyens aptes à mesurer la quantité de lumière détectée par le détecteur de lumière et des moyens aptes à délivrer le signal de commande dès lors que la quantité de lumière mesurée est diminuée d'une quantité préalablement établie, ce qui se produit quand un frelon traverse la nappe N.

Le signal de commande délivré par le circuit 6 déclenche le fonctionnement de la source S qui émet alors un champ électromagnétique uniforme dans la cavité 2. La source S est préférentiellement dimensionnée pour amener le frelon à une température de 50°C en quelques secondes, au-delà desquelles le frelon cesse de vivre et tombe. Une ou plusieurs portes d1, d2 placées dans la partie basse du piège P permettent alors de récupérer les cadavres des frelons morts. Dans un mode de réalisation particulier, un dispositif de mesure de la température présente dans la cavité contribue à l'asservissement de la source micro-ondes S pour adapter la puissance émise par cette source à la température qui règne à l'intérieur de la cavité.

Selon un perfectionnement de l'invention, le piège micro-ondes comprend un dispositif d'appel apte à attirer les frelons à l'intérieur de la cavité.

En effet, il a été mis en évidence que les frelons sont sensibles à certains stimuli permettant de les attirer en un point géographique particulier. Ces stimuli sont, par exemple, une lumière intense, où des vibrations sonores de fréquence appropriée, ou un appât chimique ou un appât biologique. C'est pourquoi, selon un perfectionnement de l'invention, le piège optique P comprend, en outre, un dispositif d'appel A apte à attirer les frelons constitué d'une source de lumière intense (par exemple un éclairage halogène) et/ou d'une source sonore à la fréquence appropriée et/ou un appât chimique ou biologique. Les stimuli qui sont émis par le dispositif d'appel sont adaptés aux frelons qu'on souhaite attirer tels que, par exemple, les frelons asiatiques. Selon l'emplacement du piège à micro-ondes, les sources d'énergie aptes à alimenter le circuit électronique 6 et le dispositif d'appel A sont constituées par une ou plusieurs batteries électriques ou par l'alimentation du secteur. Le dispositif d'appel A est préférentiellement centré à l'intérieur de la cavité, positionné par exemple sur un pied 7

Dans un mode de réalisation particulier de l'invention, le dispositif d'appel A est commandé à distance.

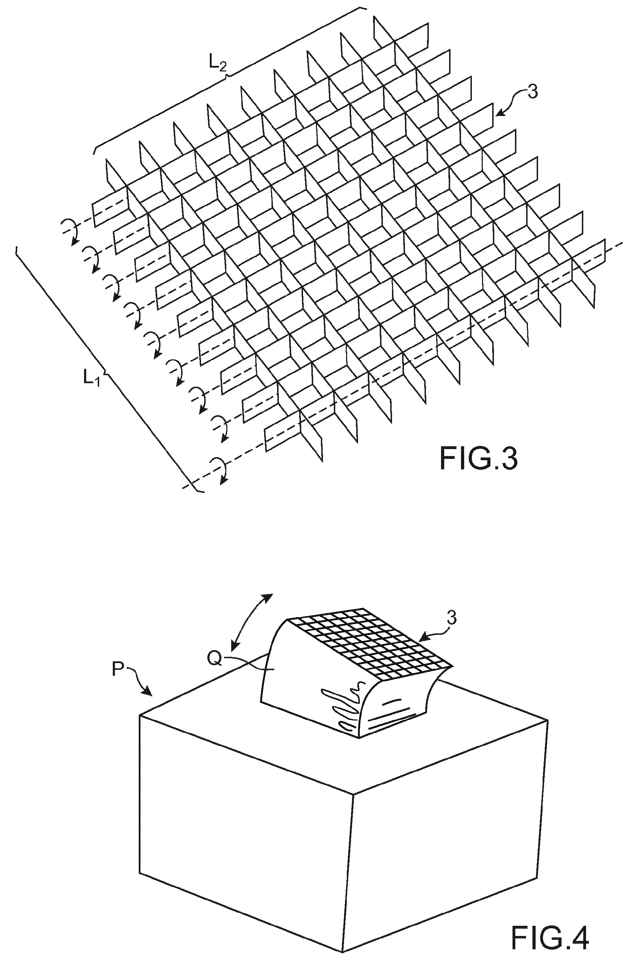

La figure 3 représente un premier mode de réalisation d'un perfectionnement du piège pour frelons de l'invention.

Selon le perfectionnement de l'invention, les moyens d'ouverture aptes à permettre l'introduction des frelons dans la cavité sont orientables dans le but de réaliser une meilleure diffusion du dispositif d'appel A vers les frelons que l'on souhaite piéger.

Selon le premier mode de réalisation du perfectionnement de l'invention (cf. figure 3), certaines parois des guides d'ondes du réseau de guides d'onde de type nid d'abeille sont orientables. Les guides d'ondes sont alors constitués, par exemple, par deux ensembles L₁, L₂ de lames métalliques perpendiculaires entre elles, les lames métalliques de l'un des deux ensembles étant orientables en pivotant selon leur axe. L'orientation des lames selon leur axe se fait par tout moyen connu en soi.

Selon un deuxième mode de réalisation du perfectionnement de l'invention (cf. figure 4), les moyens d'ouverture 3 aptes à permettre l'introduction des frelons dans la cavité sont positionnés à l'extrémité d'un tube déformable Q qui s'ouvre dans l'une des parois de la cavité. Le matériau qui constitue le tube Q est fait d'un métal apte à se déformer. Sur l'exemple de la figure 4, la section droite du tube est rectangulaire. D'autres géométries de section droite sont toutefois possibles telles que, par exemple, une section droite circulaire.

## Revendications

1. Piège pour frelon, comprenant:
- une enceinte métallique (1) qui définit une cavité (2), une paroi de l'enceinte étant munie de moyens (3) d'ouverture aptes à permettre une introduction d'au moins un frelon dans la cavité, les moyens d'ouverture (3) étant dimensionnés pour que des ondes électromagnétiques de fréquence donnée présentes dans la cavité ne puissent pas sortir de la cavité (2),
- des moyens (4, 5, 6) aptes à détecter la présence d'au moins un frelon dans la cavité (2), et
- une source (S) d'ondes électromagnétiques apte à générer des ondes électromagnétiques à la fréquence donnée à l'intérieur de la cavité (2) dès lors qu'un frelon est détecté dans la cavité.

2. Piège pour frelon selon la revendication 1, dans lequel les moyens d'ouverture (3) sont constitués d'un réseau de guides d'ondes de type nid d'abeille qui constitue tout ou partie d'une paroi de l'enceinte.

3. Piège pour frelon selon la revendication 1 ou 2, dans lequel les moyens d'ouverture sont des moyens orientables (L₁, L₂, Q).

4. Piège pour frelon selon l'une quelconque des revendications précédentes, dans lequel la cavité (2) contient des moyens d'appel (A) aptes à attirer des frelons dans la cavité.

5. Piège pour frelon selon la revendication 4, dans lequel les moyens d'appel (A) comprennent une source de lumière intense et/ou une source sonore et/ou un appât chimique ou biologique.

6. Piège pour frelon selon l'une des revendications 4 ou 5, dans lequel les moyens d'appel (A) sont des moyens d'appel de frelons asiatiques.

7. Piège pour frelon selon l'une quelconque des revendications précédentes, dans lequel les moyens (4, 5, 6) aptes à détecter la présence d'au moins un frelon dans la cavité (2) comprennent des moyens optiques qui créent une nappe de lumière dans la cavité et des moyens électroniques qui délivrent un signal de commande apte à déclencher la source (S) d'ondes électromagnétiques dès lors qu'un frelon traverse la nappe de lumière.

8. Piège pour frelon selon l'une quelconque des revendications précédentes dans lequel la fréquence donnée est sensiblement égale à 2,45 GHz.

9. Piège pour frelon selon l'une quelconque des revendications précédentes dans lequel la source (S) d'ondes électromagnétiques est un magnétron.

## Patentansprüche

1. Hornissenfalle, umfassend:
- ein Metallgehäuse (1), das einen Hohlraum (2) definiert, wobei eine Wand des Gehäuses mit Öffnungsmitteln (3) ausgestattet ist, die dazu ausgelegt sind, ein Eindringen wenigstens einer Hornisse in den Hohlraum zu ermöglichen, wobei die Öffnungsmittel (3) derart dimensioniert sind, dass elektromagnetische Wellen mit gegebener Frequenz, die in dem Hohlraum vorhanden sind, nicht aus dem Hohlraum (2) austreten können,
- Mittel (4, 5, 6), die dazu ausgelegt sind, das Vorhandensein wenigstens einer Hornisse in dem Hohlraum (2) zu erfassen, und
- eine Quelle (S) von elektromagnetischen Wellen, die dazu ausgelegt ist, elektromagnetische Wellen mit der gegebenen Frequenz innerhalb des Hohlraums (2) zu erzeugen, sobald eine Hornisse in dem Hohlraum erfasst wird.

2. Hornissenfalle nach Anspruch 1, bei der die Öffnungsmittel (3) durch ein Netz von Wellenleitern vom Bienenwabentyp gebildet sind, das eine gesamte Wand oder einen Teil einer Wand des Gehäuses bildet.

3. Hornissenfalle nach Anspruch 1 oder 2, bei der die Öffnungsmittel orientierbare Mittel (L₁, L₂, Q) sind.

4. Hornissenfalle nach einem der vorhergehenden Ansprüche, bei der der Hohlraum (2) Lockmittel (A) enthält, die dazu ausgelegt sind, Hornissen in den Hohlraum anzulocken.

5. Hornissenfalle nach Anspruch 4, bei der die Lockmittel (A) eine intensive Lichtquelle und/oder eine Schallquelle und/oder einen chemischen oder biologischen Köder umfassen.

6. Hornissenfalle nach einem der Ansprüche 4 oder 5, bei der die Lockmittel (A) Lockmittel für asiatische Hornissen sind.

7. Hornissenfalle nach einem der vorhergehenden Ansprüche, bei der die Mittel (4, 5, 6), die dazu ausgelegt sind, das Vorhandensein wenigstens einer Hornisse in dem Hohlraum (2) zu erfassen, optische Mittel umfassen, die eine Lichtwand in dem Hohlraum erzeugen, sowie elektronische Mittel, die ein Steuersignal liefern, welches dazu ausgelegt ist, die Quelle (S) von elektromagnetischen Wellen zu starten, sobald eine Hornisse die Lichtwand durchquert.

8. Hornissenfalle nach einem der vorhergehenden Ansprüche, bei der die gegebene Frequenz im Wesentlichen gleich 2,45 GHz ist.

9. Hornissenfalle nach einem der vorhergehenden Ansprüche, bei der die Quelle (S) von elektromagnetischen Wellen ein Magnetron ist.

## Claims

1. Hornet trap, **characterised in that** it comprises:
- a metal chamber (1) that defines a cavity (2), a wall of the chamber being provided with opening means (3) through which at least one hornet can enter the cavity, the opening means (3) being sized such that electromagnetic waves with a given frequency present in the cavity cannot escape from the cavity (2),
- means (4, 5, 6) of detecting the presence of at least one hornet in the cavity (2), and
- an electromagnetic wave source (S) capable of generating electromagnetic waves at the given frequency inside the cavity (2) when a hornet is detected in the cavity.

2. Hornet trap according to claim 1, in which the opening means (3) are composed of a network of honeycomb type waveguides forming all or part of a wall of the chamber.

3. Hornet trap according to claim 1 or 2, in which the opening means can be oriented (L₁, L₂, Q).

4. Hornet trap according to any one of the previous claims, in which the cavity (2) contains call means (A) capable of attracting hornets into the cavity.

5. Hornet trap according to claim 4, in which the call means (A) comprise an intense light source and/or a sound source and/or chemical or biological bait.

6. Hornet trap according to one of claims 4 or 5, in which the call means (A) are Asian hornet call means.

7. Hornet trap according to any one of the previous claims, in which the means (4, 5, 6) capable of detecting the presence of at least one hornet in the cavity (2) comprise optical means that create a strip of light in the cavity and electronic means that output a control signal capable of triggering the electromagnetic wave source (S) as soon as a hornet passes through the light strip.

8. Hornet trap according to any one of the previous claims, in which the given frequency is approximately equal to 2.45 GHz.

9. Hornet trap according to any one of the previous claims, in which the electromagnetic wave source (S) is a magnetron.
